# FASCICULE DE BREVET EUROPEEN

(11) **EP 0 892 940 B1**
(45) Date de publication et mention de la délivrance du brevet: **13.09.2000**
(21) Numéro de dépôt: 97919452.9
(22) Date de dépôt: 01.04.1997
(51) Int. Cl.: G03B 21/20

(54) **DISPOSITIF DE REPARTITION DE LUMIERE SUR UN SUPPORT D'IMAGE**
VORRICHTUNG ZUR LICHTVERTEILUNG AUF EINEM BILDTRÄGER
DEVICE FOR DISTRIBUTING LIGHT ON AN IMAGE FRAME

(30) Priorité: 10.04.1996 FR 9604469
(43) Date de publication de la demande: 27.01.1999
(73) Titulaire: Hardware, 92000 Nanterre (FR)
(72) Inventeur: RUELLAN, Yves, F-92200 Neuilly-sur-Seine (FR)
(74) Mandataire: Rousset, Jean-Claude
(86) Numéro de dépôt international: FR9700577
(87) Numéro de publication internationale: WO9738352

(56) Documents cités:
- US-A- 3 615 161
- US-A- 5 191 474

## Description

US-A-3 615 161 décrit un dispositif comprenant un support d'image et des moyens réflecteurs pour projeter la lumière provenant d'une source quasi-ponctuelle vers le support d'image, ainsi qu'un élément optique divergent propre à reprendre le faisceau convergent provenant des moyens réflecteurs pour le diriger vers le support d'image par l'intermédiaire d'un élément optique complémentaire.

On connaît par ailleurs dans la technique un dispositif pour répartir la lumière émise par une source quasi-ponctuelle sur la surface d'un support d'image, comprenant des moyens de focalisation pour projeter ladite lumière vers un point image de la source, un élément optique divergent propre à transformer le faisceau convergent provenant des moyens de focalisation en un faisceau divergent, et un condenseur reprenant ledit faisceau divergent pour le concentrer vers le support d'image. Un tel dispositif convient plus particulièrement au cas où le support d'image a une dimension supérieure à 8 cm.

On utilise des lampes à arc au xénon d'une puissance au moins égale à 1 600 W dans des projecteurs de diapositives de grand format. Dans ces projecteurs, la lampe à arc au xénon est utilisée en tant que source lumineuse quasi-ponctuelle, c'est-à-dire qu'on recueille et qu'on transmet par différents éléments optiques la lumière émise à partir d'un volume réduit, dont les dimensions ne sont que de quelques millimètres. A l'intérieur de ce petit volume existe un fort gradient de luminance entre l'anode et la cathode. La luminance très élevée (point chaud) au voisinage de la cathode se traduit par un point chaud au centre de la diapositive. Pour éviter de brûler celle-ci, une solution connue consiste à étaler le faisceau, ce qui conduit à la perte d'une partie importante de la lumière. En outre, l'éclairement de la surface de la diapositive reste très hétérogène, l'éclairement étant à peu près deux fois plus faible aux bords qu'au centre.

Le but de l'invention est de remédier aux inconvénients précités, et d'améliorer à la fois le rendement de la collecte de lumière sur la diapositive, ou tout autre support d'image, et l'uniformité de sa répartition sur celui-ci.

Ce problème se pose plus particulièrement pour un support stationnaire, c'est-à-dire qui reste immobile de façon prolongée, ou se déplaçant à vitesse lente, par opposition à un film cinématographique qui défile de façon continue et rapide.

L'invention vise notamment un dispositif selon la revendication 1.

Des caractéristiques optionnelles du dispositif selon l'invention, complémentaires ou alternatives, sont énoncées dans les revendications dépendantes.

Les caractéristiques et avantages de l'invention seront exposés plus en détail dans la description ci-après, en se référant aux dessins annexés, sur lesquels:
- La figure 1 est une représentation schématique partielle d'un projecteur de diapositives selon l'invention;
- La figure 2 correspond à une partie agrandie de la figure 1, pour une variante du dispositif;
- Les figures 3 et 4 sont des schémas illustrant la répartition de lumière sur un écran obtenue au moyen d'un projecteur selon l'invention; et
- Les figures 5 et 6 sont des schémas analogues aux figures 3 et 4, relatifs à un projecteur connu.

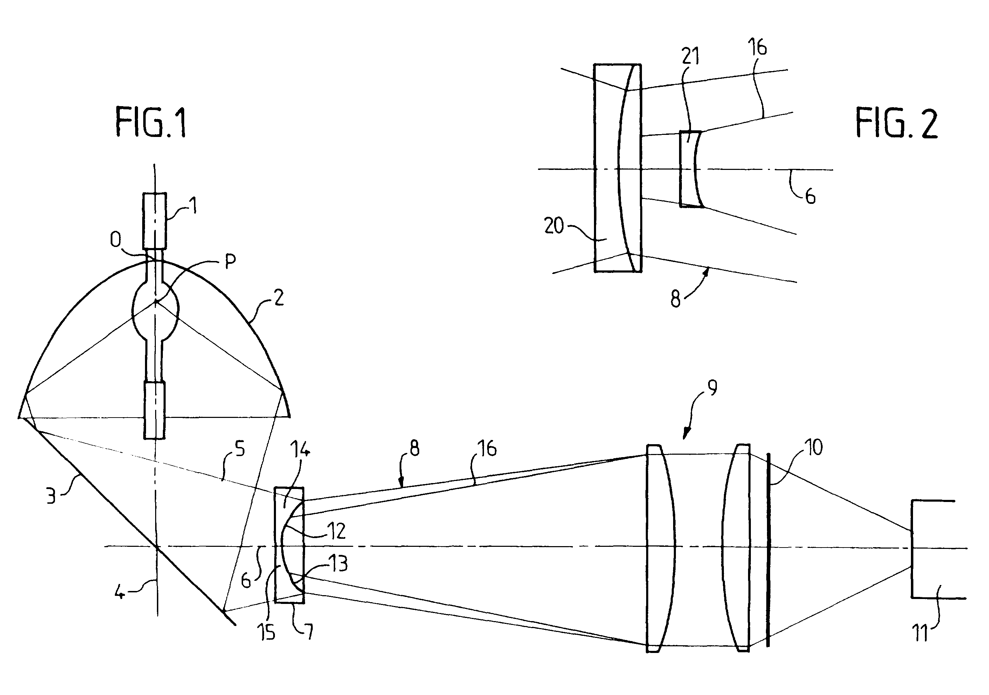

Le projecteur illustré à la figure 1 utilise comme source lumineuse une lampe à arc au xénon 1. Une telle lampe émet une lumière pratiquement blanche, à partir d'un volume très réduit assimilable à un point P. Cependant, la luminance varie de façon importante à l'intérieur de ce petit volume. A titre d'exemple, pour une lampe commercialisée par la société OSRAM sous la désignation XBO, d'une puissance de 2 500 W, la luminance passe d'une valeur maximale de 360 000 cd/cm² au voisinage immédiat du centre de la cathode à 10 000 cd/cm² au centre de l'anode.

Le point P est situé au premier foyer d'un miroir concave ellipsoïdal 2 d'axe vertical dont la concavité est tournée vers le bas. Un miroir froid 3, orienté à 45° par rapport à l'axe 4 du miroir concave 2, est traversé par les rayons infrarouges renvoyés par celui-ci et réfléchit les rayons visibles selon un faisceau convergent 5 ayant un axe horizontal 6. Le faisceau 5 traverse une lentille divergente 7 qui le transforme en un faisceau divergent 8, lequel arrive sur un condenseur 9 représenté ici sous la forme de deux lentilles convergentes. Le condenseur 9 est immédiatement suivi, le long de l'axe 6, par une diapositive 10 sur la surface de laquelle est répartie la lumière émise par la lampe 1 et traitée par les miroirs 2 et 3, la lentille 7 et le condenseur 9. Un objectif 11 également centré sur l'axe 6 permet de projeter le contenu de la diapositive sur un écran vertical non représenté, placé à distance du projecteur.

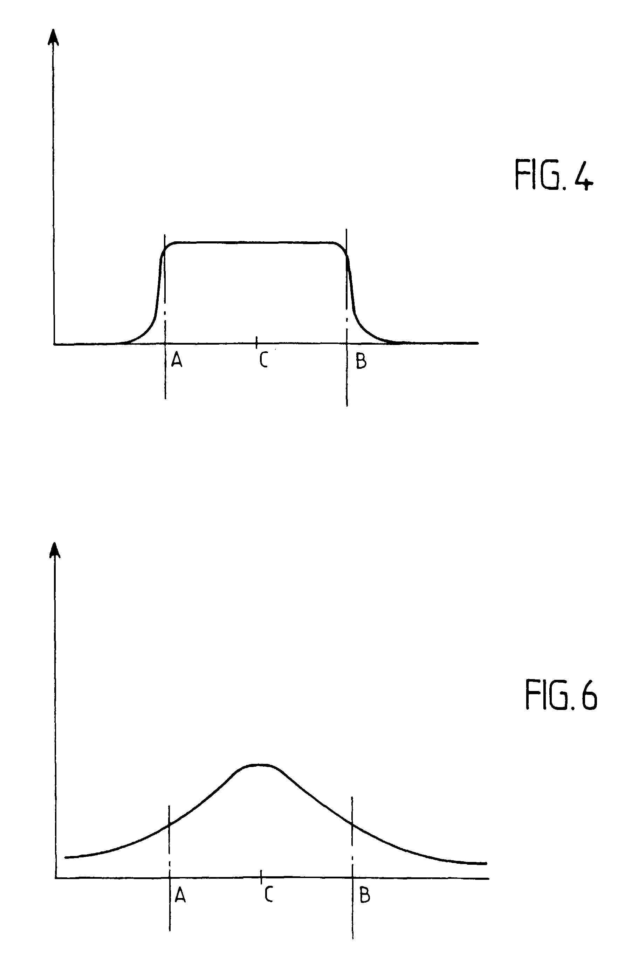

La structure générale du projecteur qui vient d'être décrite est connue, et les figures 5 et 6 illustrent la répartition de lumière obtenue lors de la projection d'une diapositive carrée de 155 mm de côté, uniformément blanche, sur un écran de 1 m de côté, en utilisant comme lentille 7 une lentille divergente simple. Sur la figure 5, les nombres indiqués à côté des points représentent l'éclairement en lux aux points considérés. La courbe de la figure 6 représente la variations de l'éclairement le long d'une ligne droite passant par le centre C de l'écran et par les milieux A et B de deux côtés opposés de celui-ci. On voit que l'éclairement varie sensiblement du double au simple entre le point C et chacun des points A et B. Le rapport est encore plus grand (figure 5) entre le centre C et les zones d'angles de l'écran. De plus, la figure 6 montre qu'une quantité appréciable de lumière est projetée au-delà des points A et B, c'est-à-dire à l'extérieur de l'écran carré, et par conséquent perdue.

Selon l'invention, la face de sortie concave de la lentille 7 présente une région centrale 12 en forme de calotte sphérique, qui se raccorde à une région périphérique 13 en forme d'anneau de sphère. Les régions 12 et 13 sont toutes deux de révolution autour de l'axe 6. La région 13 présente un rayon de courbure plus grand que la région 12 de façon à définir une partie annulaire 14 de la lentille de puissance optique plus petite que la partie centrale 15 définie par la région 12. Les rayons de courbure des régions 12 et 13 sont choisis de telle sorte que la partie 16 du faisceau 8 traversant la partie centrale 15 de la lentille soit répartie sensiblement sur toute la surface utile du condenseur 9, comme l'est le faisceau 8 dans son ensemble. Il en résulte une répartition élargie de la lumière provenant de la région la plus chaude de la lampe 1, la lumière provenant de la source n'étant pas davantage étalée dans son ensemble et étant donc finalement projetée à l'intérieur de l'écran.

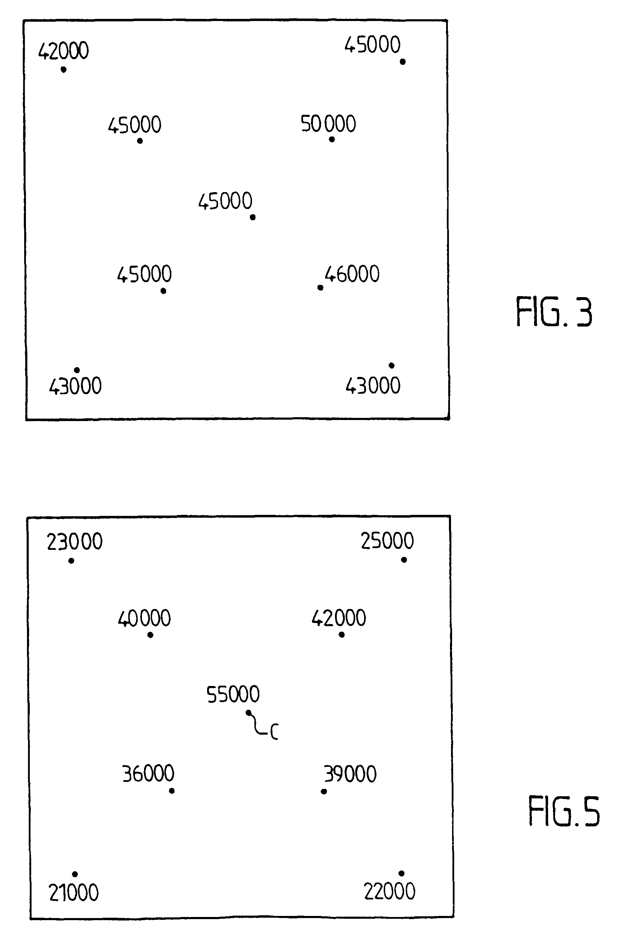

Les figures 3 et 4, établies de la même façon que les figures 5 et 6 à partir d'une projection réalisée en utilisant la lentille 7 décrite, montrent que la lumière est effectivement recueillie à peu près intégralement sur l'écran, et répartie de façon à peu près uniforme sur la surface de celui-ci.

On décrit en détail ci-après un exemple de réalisation de l'invention. On utilise une lampe OSRAM XBO d'une puissance de 2 000 W. Cette lampe traverse un trou central de diamètre 55 mm ménagé au fond du miroir ellipsoïdal 2 qui présente un diamètre d'ouverture de 203 mm, les deux foyers étant respectivement à 30 mm et à 420 mm du sommet O du miroir. Le coefficient de réflexion du miroir 2 est de 0,80. La face d'entrée de la lentille 7 se trouve à 320 mm du point O, compte tenu de la réflexion du miroir 3. Les rayons de courbure des régions 12 et 13 de la face de sortie sont de 32 et 43 mm respectivement, les diamètres extérieurs de ces régions étant respectivement de 36 et 72 mm. La diapositive 10 est un carré de 155 mm de côté, placée à une distance du point O de 887 mm. Les deux lentilles du condenseur 9 ont un diamètre de 230 mm. La face d'entrée plane de la première lentille est à 769 mm du point O, et sa face de sortie a une forme de calotte sphérique convexe d'un rayon de 233 mm. La face d'entrée de la seconde lentille, placée à 829 mm du point O, présente un rayon de courbure convexe de 175 mm, et sa face de sortie est plane. L'indice de réfraction de la lentille 7 est 1,48 et celui des lentilles 9 est 1,52. Compte tenu de l'ensemble des valeurs numériques ci-dessus, la lumière envoyée sur la diapositive provient d'une région de la lampe en forme ae cylindre d'un diamètre de 1,3 mm et d'une longueur de 3 mm, dont l'une des bases a pour centre le centre de la cathode. Le flux lumineux reçu par la diapositive représente environ 43% du flux total émis, et le rapport entre l'éclairement minimal et l'éclairement maximal est d'environ 70%.

La lentille 7 peut être remplacée, comme représenté à la figure 2, par deux lentilles divergentes de diamètres différents, disposées l'une à la suite de l'autre sur le trajet de la lumière. Dans l'exemple représenté, chacune de ces deux lentilles possède une face d'entrée plane et une face de sortie en forme de calotte sphérique concave, la seconde lentille 21 étant plus petite que la première lentille 20. Cette dernière est donc traversée par la totalité du faisceau envoyé vers la diapositive, tandis que la lentille 21 n'est traversée que par une partie centrale 16 de ce faisceau. La lentille 21 définit donc une partie centrale, de plus grande puissance optique, de l'élément divergent constitué par l'ensemble des deux lentilles. Au lieu d'une seule lentille 21, on peut utiliser un dispositif constitué de plusieurs petites lentilles divergentes placées côte à côte.

Il est par ailleurs possible de subdiviser la partie périphérique de l'élément optique divergent en portions annulaires coaxiales de puissance optique différente.

La forme de l'élément optique divergent étant choisie, ses caractéristiques numériques peuvent être définies, en fonction des paramètres de l'ensemble du dispositif, en utilisant des méthodes de calcul courantes en optique.

## Revendications

1. Dispositif pour répartir la lumière émise par une source quasi-ponctuelle (1) sur la surface d'un support d'image (10), comprenant des moyens de focalisation (2) pour projeter ladite lumière vers un point image de la source, un élément optique divergent (7) propre à transformer le faisceau convergent provenant des moyens de focalisation en un faisceau divergent, et un condenseur (9) reprenant ledit faisceau divergent pour le concentrer vers un emplacement prévu sur le dispositif pour le support d'image, caractérisé en ce que ledit élément optique divergent comprend une partie centrale (15) traversée par l'axe (6) du faisceau et une partie périphérique annulaire (14) entourant la partie centrale, cette dernière ayant une puissance optique plus grande que la partie périphérique de façon que les rayons lumineux (16) qui la traversent soient répartis sensiblement sur la même étendue d'un support d'image placé audit emplacement que l'ensemble (8) des rayons traversant l'élément optique divergent.

2. Dispositif selon la revendication 1, dans lequel l'élément optique divergent comprend au moins une lentille dont une face est concave et présente un rayon de courbure plus petit dans une région centrale (12) que dans la région périphérique (13) entourant celle-ci, ladite région centrale et ladite région périphérique définissant les parties centrale et périphérique de l'élément divergent.

3. Dispositif selon la revendication 1, dans lequel l'élément optique divergent comprend au moins deux lentilles divergentes (20, 21) disposées en succession le long de l'axe (6) du faisceau et s'étendant radialement sur des distances différentes à partir de celui-ci, la lentille (21) de plus petite extension radiale définissant la partie centrale de l'élément optique divergent.

4. Dispositif selon l'une des revendications précédentes, dans lequel la ou chaque lentille de l'élément divergent présente une face plane et une face concave.

5. Dispositif selon la revendication 4, dans lequel ladite face plane est la face d'entrée.

6. Dispositif selon l'une des revendications précédentes, comprenant en tant que source (1) une lampe à arc au xénon.

7. Dispositif selon la revendication 6, dans lequel ladite lampe a une puissance supérieure ou égale à 1 600 W.

8. Dispositif selon l'une des revendications précédentes, dans lequel les moyens de focalisation comprennent un miroir concave ellipsoïdal (2).

9. Dispositif selon l'une des revendications précédentes, comprenant en outre un objectif (11) disposé après ledit emplacement pour le support d'image, propre à projeter sur un écran de plusieurs mètres de côté une image formée sur ledit support d'image (10).

## Patentansprüche

1. Vorrichtung zur Verteilung des von einer quasi punktförmigen Quelle (1) ausgestrahlten Lichts auf der Oberfläche eines Bildträgers (10), mit einer Fokussiereinrichtung (2), um das Licht zu einem Bildpunkt der Quelle zu werfen, einem optischen Zerstreuungselement (7), das den von der Fokussiereinrichtung kommenden konvergenten Strahl in einen divergenten umwandelt und mit einem Kondensor (9), der den divergenten Strahl aufnimmt, um ihn zu einem Ort hin zu konzentrieren, an dem in der Vorrichtung der Bildträger angeordnet sein soll, dadurch gekennzeichnet, daß das optische Zerstreuungselement einen zentralen Teil (15) aufweist, durch den die Achse (6) des Lichtstrahls hindurchgeht, und einen den zentralen Teil umgebenden peripheren, ringförmigen Teil (14), wobei der zentrale Teil eine größere Brechkraft besitzt als der periphere Teil, so daß die Lichtstrahlen (16), die ihn durchqueren, auf einem am genannten Ort angeordneten Bildträger im wesentlichen über die gleiche Ausdehnung wie die Gesamtheit (8) der das optische Zerstreuungselement durchquerenden Strahlen verteilt werden.

2. Vorrichtung nach Anspruch 1, in der das optische Zerstreuungselement mindestens eine Linse umfaßt, deren eine Seite konkav ist und in einem zentralen Bereich (12) einen kleineren Krümmungsradius aufweist als im peripheren Bereich (13), der den zentralen Bereich umgibt, wobei der zentrale Bereich und der periphere Bereich den zentralen und peripheren Teil des Zerstreuungselements definieren.

3. Vorrichtung nach Anspruch 1, in der das optische Zerstreuungselement mindestens zwei Zerstreuungslinsen (20, 21) umfaßt, die entlang der Achse (6) des Lichtstrahls nacheinander angeordnet sind und die sich, ausgehend von dieser Achse, radial über unterschiedliche Entfernungen erstrecken, wobei die Linse (21) mit der kleineren radialen Ausdehnung den zentralen Teil des optischen Zerstreuungselements bildet.

4. Vorrichtung nach einem der vorhergehenden Ansprüche, in der die Linse oder jede Linse des Zerstreuungselements eine plane Seite und eine konkave Seite aufweist.

5. Vorrichtung nach Anspruch 4, in der die plane Seite die Eintrittsseite ist.

6. Vorrichtung nach einem der vorhergehenden Ansprüche, die als Lichtquelle (1) eine Xenonbogenlampe aufweist.

7. Vorrichtung nach Anspruch 6, in der die Lampe eine Leistung von 1600 W oder darüber besitzt.

8. Vorrichtung nach einem der vorhergehenden Ansprüche, in der die Fokussiereinrichtung einen ellipsoidförmigen Hohlspiegel (2) aufweist.

9. Vorrichtung nach einem der vorhergehenden Ansprüche, die außerdem ein Objektiv (11) umfaßt, das nach dem für den Bildträger vorgesehenen Ort angeordnet ist und ein auf dem Bildträger (10) erzeugtes Bild auf eine Bildwand von mehreren Metern Seitenlänge projiziert.

## Claims

1. Device for distributing light emitted by a quasi-punctiform source (1) onto the surface of an image frame (10) comprising focussing means (2) to project the said light towards an image point of the source, a divergent optical element (7) able to transform the convergent beam from the focussing means into a divergent beam, and a condenser (9) receiving the said divergent beam to concentrate it towards a location provided on the device for the image frame, characterised in that the said divergent optical element comprises a central part (1) traversed by the axis (6) of the beam and an annular peripheral part (14) surrounding the central part, the latter having a greater optical power than the peripheral part so that the light rays (16) traversing it are spread approximately over the same extent of an image frame placed at the said location as the whole (8) of the rays traversing the divergent optical element.

2. Device according to claim 1, in which the divergent optical element comprises at least one lens of which at least one face is concave and has a radius of curvature smaller in a central region (10) than in the peripheral region (13) surrounding it, the said central region and the said peripheral region defining the central and peripheral parts of the divergent element.

3. Device according to claim 1 in which the divergent optical element comprises at least two divergent lenses (20, 21) arranged in succession along the axis (6) of the beam and extending radially over different distances from this, the lens (21) of the smallest radial extension defining the central part of the divergent optical element.

4. Device according to any of the previous claims in which the or each lens of the divergent element has a planar face and a concave face.

5. Device according to claim 4 in which the said planar face is the inlet face.

6. Device according to any of the previous claims comprising as source (1) a xenon arc lamp.

7. Device according to claim 6 in which the said lamp has a power greater than or equal to 1600 W.

8. Device according to any of the previous claims in which the focussing means comprise an ellipsoidal concave mirror (2).

9. Device according to any of the previous claims also comprising a lens (11) arranged after the said location for the image frame, able to project onto a screen of several metres dimension an image formed on the said image frame (10).
